# EUROPEAN PATENT SPECIFICATION

(11) **EP 2 328 201 B1**
(45) Date of publication and mention of the grant of the patent: **21.03.2012**
(21) Application number: 10189920.1
(22) Date of filing: 04.11.2010
(51) Int. Cl.: H01M 2/10

(54) **Battery Pack**
Batteriepack
Bloc-batteries

(30) Priority: 05.11.2009 US 258558 P; 11.06.2010 US 814372
(43) Date of publication of application: 01.06.2011
(73) Proprietor: SB LiMotive Co., Ltd., Suwon-si Gyeonggi-do (KR)
(72) Inventor: Kim, Myung-Chul, Gyeonggi-do (KR); Lee, Hyun-Ye, Gyeonggi-do (KR)
(74) Representative: Gulde Hengelhaupt Ziebig & Schneider

(56) References cited:
- WO-A1-2008/035873
- US-A1- 2005 084 748
- US-A1- 2009 263 705

## Description

### BACKGROUND

### 1. Field

One or more embodiments of the present invention relate to a battery pack in which a plurality of stacked battery modules are connected to each other.

### 2. Description of the Related Art

In general, unlike primary batteries that are not chargeable, secondary batteries are chargeable and dischargeable. Secondary batteries are used as energy sources of mobile devices, electric vehicles, hybrid electric vehicles, electric bicycles, uninterruptible power supplies, etc.

From among them, small devices such as the mobile devices use a small number of battery cells. On the other hand, medium or large devices such as the electric vehicles and hybrid electric vehicle require high power and large capacity and thus use a battery pack in which a plurality of battery cells are electrically connected to each other.

Normally, a plurality of battery cells is connected in series or in parallel so as to be included in a battery unit. A plurality of battery units is connected to form a battery module. A plurality of battery modules are connected to form a battery pack in order to provide higher power and larger capacity.

When a battery pack is assembled by using a plurality of battery modules, the battery modules need to be firmly connected to each other so as to achieve a stable structure of the battery pack.

### SUMMARY

One or more embodiments of the present invention include a battery pack capable of easily connecting a plurality of stacked battery modules to each other.

Additional aspects will be set forth in part in the description which follows and, in part, will be apparent from the description, or may be learned by practice of the presented embodiments.

According to one or more embodiments of the present invention, a battery pack is provided comprising a plurality of battery modules. Each battery module comprises a plurality of battery units arranged along a first direction (Y), a first end plate and a second end plate. The plurality of battery units is arranged between the first and second end plate, wherein the first and second end plates are fixed to each other or are fixed to the plurality of battery units. A first or second end plate of a first battery module is fixed to a first or second end plate of a second battery module being adjacent to the first battery module in order to connect adjacent battery modules of the battery pack.

The first and second end plates of the battery pack of the invention can be fixed to each other by a first guide plate arranged along said first direction (Y) on a first side surface of the plurality of battery units and coupled to the first and second end plate, and by a second guide plate arranged along said first direction (Y) on a second side surface of the plurality of battery units being opposite to said first side surface and coupled to the first and second end plates.

The first and second end plates of the battery pack of the invention can comprise a base plate and at least one flange unit extending from the base plate to combine different end plates with each other and/or to fix the guide plates thereto.

In the battery pack of the invention, the at least one flange unit can extend from side surfaces of the base plate in a direction away from the plurality of battery units.

A battery module of the battery pack of the invention further comprises at least one of a first reinforcement plate mounted on a third side surface of the plurality of battery units, extending in the first direction (Y) and coupled to the first and second end plates; and a second reinforcement plate mounted on a fourth side surface of the plurality of battery units opposite the third side surface, extending in the first direction (Y) and coupled to the first and second end plates.

In the battery pack of the invention, said first reinforcement plate comprises a first base plate on the third side of the plurality of battery units and first bent portions extending from sides of the first base plate away from the plurality of battery units, and said second reinforcement plate may comprise a second base plate on the fourth side of the plurality of battery units and second bent portions extending from sides of the second base plate away from the plurality of battery units.

In the battery pack of the invention, said first reinforcement plate of a first battery module is combined to said second reinforcement plate of a second, adjacent battery module such that a gas discharge path is formed.

An insulation plate can be mounted on a surface of the first and/or second base plate facing the battery module to which the respective reinforcement plate is mounted.

In the battery pack of the invention, the at least one flange unit may comprise a first flange unit extending from a first side of the base plate, a second flange unit extending from a second side of the base plate, the second side being opposite to the first side, a third flange unit extending from a third side of the base plate, and a fourth flange unit extending from a fourth side of the base plate, the fourth side being opposite to the third side.

The first guide plate may be attached to the first flange unit and the second guide plate may be attached to the second flange unit.

Furthermore, the first reinforcement plate may be attached to the third flange unit and the second reinforcement plate may be attached to the fourth flange unit.

The third flange unit can comprises a reduced height part adapted to receive said first reinforcement plate of the respective battery module and a second reinforcement plate of a neighboring battery module.

In the battery pack of the invention, the at least one flange unit can comprise combination holes to combine different end plates with each other.

Connecting elements may be used to combine the combination holes of different end plates. Connecting elements being nuts and bolts can be used to combine the combination holes of different end plates.

In the battery pack of the invention, the first and second guide plates may comprise heat-radiating holes.

### BRIEF DESCRIPTION OF THE DRAWINGS

These and/or other aspects will become apparent and more readily appreciated from the following description of the embodiments, taken in conjunction with the accompanying drawings of which:

FIG. 1 is a perspective view of a battery module, according to an embodiment of the present invention;

FIG. 2 is a perspective view of an end plate of the battery module illustrated in FIG. 1, according to an embodiment of the present invention;

FIG. 3 is a magnified perspective view of a plurality of end plates illustrated in FIG. 1 when the end plates are connected, according to an embodiment of the present invention;

FIG. 4 is a magnified perspective view of one of the end plates illustrated in FIG. 3 when the end plate is mounted, according to an embodiment of the present invention;

FIG. 5 is a front view of the end plate illustrated in FIG. 4, according to an embodiment of the present invention; and

FIG. 6 is a perspective view of a battery pack in which a plurality of battery modules illustrated in FIG. 1 are stacked, according to an embodiment of the present invention.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

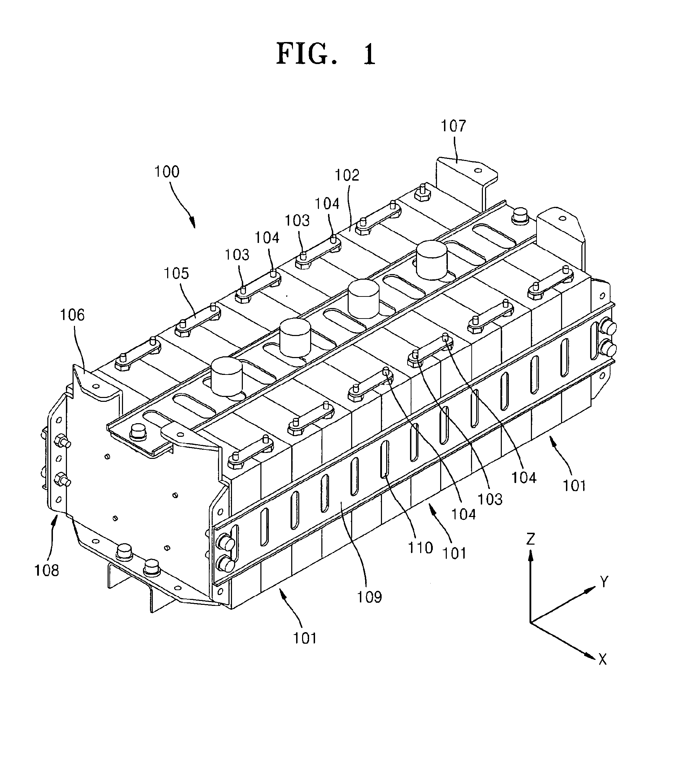

FIG. 1 is a perspective view of a battery module 100, according to an embodiment of the present invention.

Referring to FIG. 1, the battery module 100 includes a plurality of battery units 101. The battery units 101 are sequentially arranged along a horizontal direction (Y direction). Alternatively, the battery units 101 may be sequentially arranged along a vertical direction (Z direction). The structure of the battery units 101 is not limited to any one structure as long as the battery units 101 are stacked in one direction.

Although not shown in FIG. 1, a plurality of battery cells is stacked in every battery unit 101 and is accommodated in a case 102.

A secondary battery such as a general lithium secondary battery may be used as a battery cell. For example, the battery cell may be a cylindrical secondary battery, an angular secondary battery, or a polymer secondary battery and is not limited to any one secondary battery. The battery cells are electrically connected by using positive and negative electrode tabs that are respectively and electrically connected to positive and negative terminals 103 and 104 that protrude from the case 102. For example, the battery cells may be connected in parallel, in series, or in parallel and series and the connection method of the battery cells is not limited to any one connection method.

The battery units 101 are arranged so that polarities of neighboring battery units 101 are opposite to each other. The positive terminal 103 of one battery unit 101 is connected to the negative terminal 104 of a neighboring battery unit 101 by using a bus bar 105.

As such, the battery units 101 are sequentially connected to form one battery module 100. The number of battery units 101 may be determined in consideration of charge and discharge capacities required to design the battery module 100.

A pair of end plates 108 are separately mounted at outermost sides of the battery module 100. The end plates 108 include a first end plate 106 mounted at one end of the battery module 100 and a second end plate 107 mounted at the other end of the battery module 100.

One surface of the first end plate 106 and one surface of the second end plate 107 separately contact outer surfaces of the battery units 101 arranged at the outermost sides of the battery module 100.

The first and second end plates 106 and 107 are combined by using guide plates 109. The guide plates 109 extend along side walls of the battery units 101. Each of the guide plates 109 is a strip-type plate of which one end is screw-combined with the first end plate 106 and the other end is screw-combined with the second end plate 107. As such, the battery units 101 may not be dislocated from their sequentially arranged positions in the horizontal direction.

Heat radiating holes 110 are formed in the guide plates 109. The heat radiating holes 110 are arranged at uniform intervals along a length direction of the guide plates 109. The heat radiating holes 110 are formed to rapidly radiate to the outside heat generated from the battery units 101 during operation.

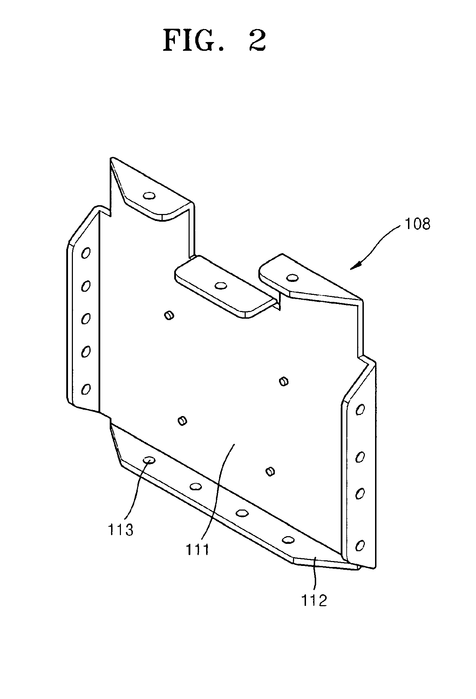

FIG. 2 is a perspective view of an end plate 108 illustrated in FIG. 1, according to an embodiment of the present invention.

Referring to FIG. 2, the end plate 108 includes a base plate 111 and a flange unit 112 bent from the base plate 111. The base plate 111 has a size that is sufficient to cover an outer surface of the battery units 101 illustrated in FIG. 1. Although the base plate 111 has an almost square shape in FIG. 2, the shape of the base plate 111 is not limited thereto.

The flange unit 112 is bent from edges of the base plate 111 in a direction opposite to the direction in which the battery units 101 are arranged. The flange unit 112 may be variously bent according to a combination method with other elements. For example, the flange unit 112 may have one bent portion from the base plate 111 without a cut at each of left, right, and bottom edges of the base plate 111, and may have a plurality of bent portions having different heights by cutting a portion of the base plate 111 at a top edge of the base plate 111.

Meanwhile, a plurality of combination holes 113 are formed in the flange unit 112.

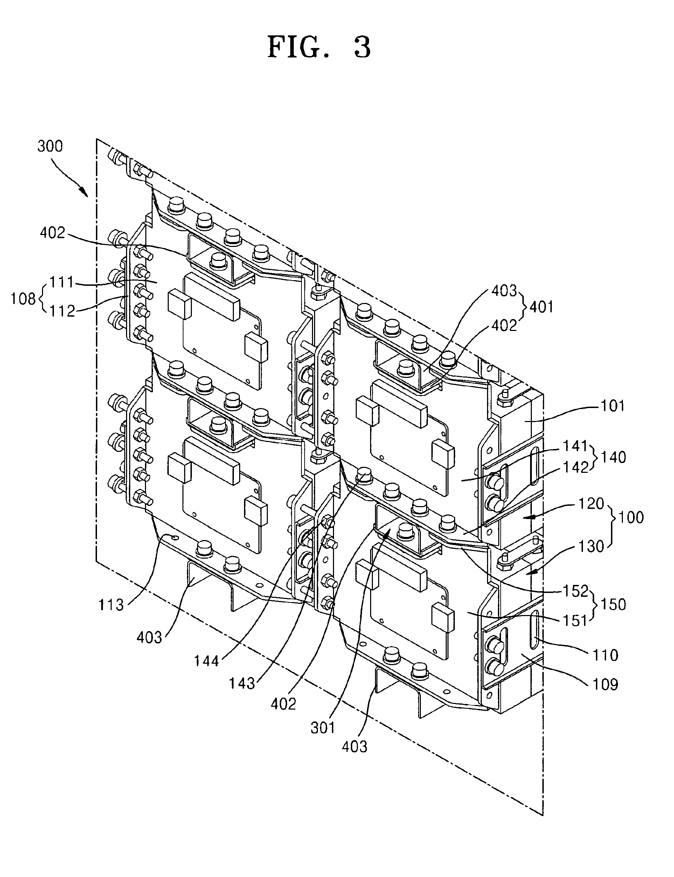

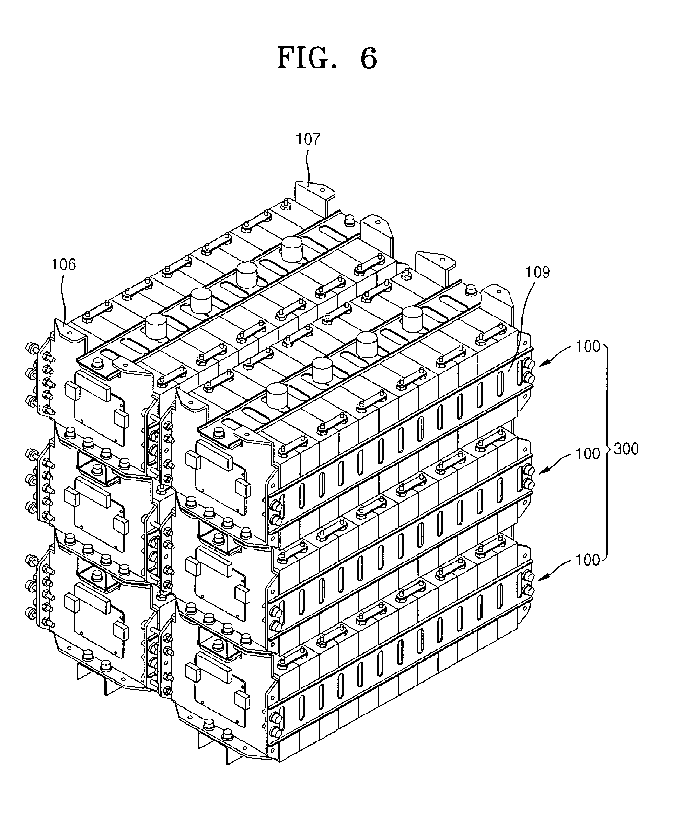

FIG. 3 is a magnified perspective view of a plurality of end plates 108 illustrated in FIG. 1 when the end plates 108 are connected, according to an embodiment of the present invention. FIG. 6 is a perspective view of a battery pack 300 in which a plurality of battery modules 100 illustrated in FIG. 1 are stacked, according to an embodiment of the present invention.

In FIG. 3, the end plates 108 include and are substantially identical to upper and lower end plates 140 and 150 to be described later as well as the first and second end plates 106 and 107 illustrated in FIG. 1.

Referring to FIGS. 3 and 6, the battery pack 300 is an assembly of the battery modules 100 stacked in horizontal and vertical directions. The number of battery modules 100 may be determined in consideration of charge and discharge capacities required to design the battery pack 300.

In this case, the battery modules 100 stacked in the horizontal and vertical directions are connected to each other. As described above in relation to FIG. 1, a pair of end plates 108 is separately mounted at outermost sides of every battery module 100. Neighboring battery modules 100 are combined by connecting to each other the end plates 108 mounted at the outermost sides of the battery modules 100.

For example, an upper battery module 120 and a lower battery module 130 arranged under the upper battery module 120 are combined as described below.

An upper end plate 140 is disposed at an outermost side of the upper battery module 120. The upper end plate 140 includes an upper base plate 141 and an upper flange unit 142 bent from edges of the upper base plate 141. A lower end plate 150 is disposed at an outermost side of the lower battery module 130. The lower end plate 150 includes a lower base plate 151 and a lower flange unit 152 bent from edges of the lower base plate 151.

The upper and lower end plates 140 and 150 are disposed at the same position in the vertical direction. At least a portion of the upper flange unit 142 bent from a bottom edge of the upper base plate 141 surface-contacts the lower flange unit 152 cut and bent from a top edge of the lower base plate 151.

In this case, combination holes formed in the upper and lower flange units 142 and 152 are matched to each other and bolts 143 are inserted into the combination holes so as to be screwed into nuts 144.

As such, the upper and lower end plates 140 and 150 are combined with each other. The upper and lower battery modules 120 and 130 supported by the upper and lower end plates 140 and 150 may not be dislocated. In this manner, the battery modules 100 stacked in the horizontal and vertical directions are firmly fixed to each other.

Meanwhile, although a combination method using fasteners such as the bolts 143 and the nuts144 is described above, the combination method is not limited to any one combination method as long as the upper end plate 140 is combined with the lower end plate 150. For example, a welding combination method may be used.

Furthermore, reinforcement plates 401 for structurally reinforcing and supporting the battery modules 100 are further mounted on the battery modules 100. The reinforcement plates 401 include upper and lower reinforcement plates 402 and 403.

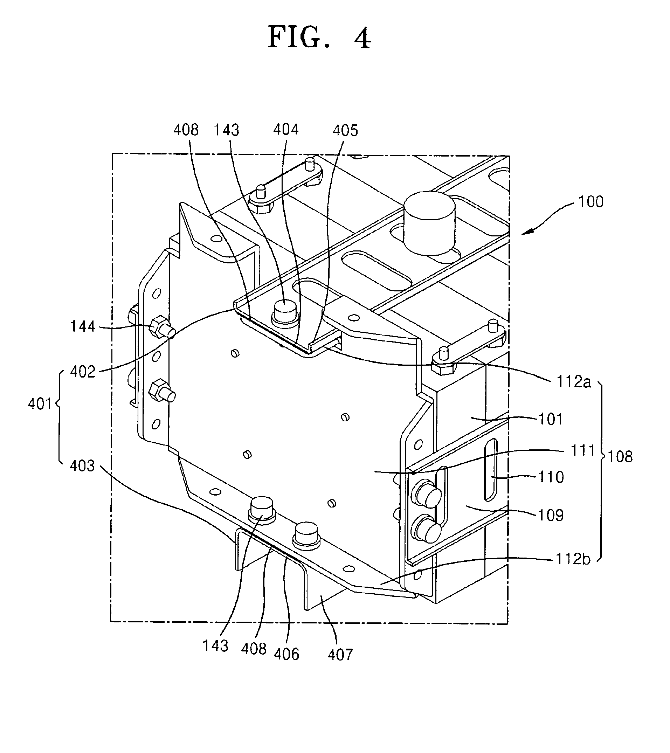

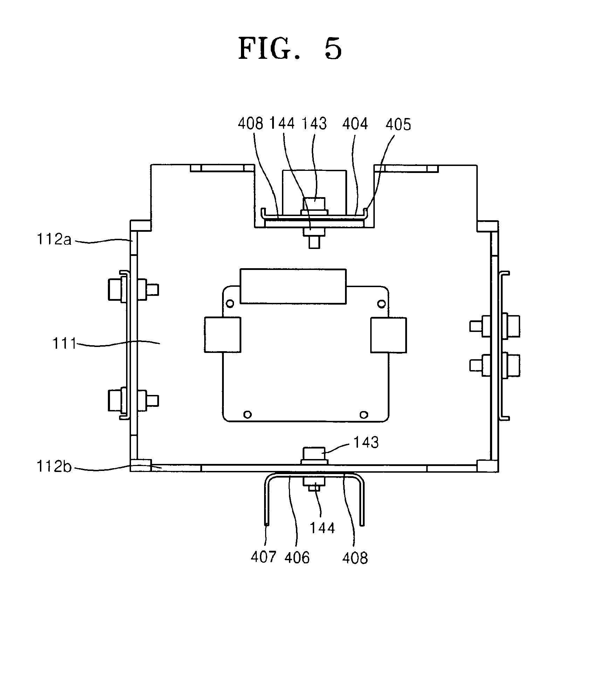

FIG. 4 is a magnified perspective view of one of the end plates 108 illustrated in FIG. 3 when the end plate 108 is mounted, according to an embodiment of the present invention. FIG. 5 is a front view of the end plate 108 illustrated in FIG. 4, according to an embodiment of the present invention.

Referring to FIGS. 4 and 5, the end plate 108 includes a base plate 111, an upper flange unit 112a bent from a top edge of the base plate 111, and a lower flange unit 112b bent from a bottom edge of the base plate 111. The upper flange unit 112a forms a plurality of bent portions having different heights by cutting a portion of the base plate 111, and the lower flange unit 112b forms one bent portion from the base plate 111 without a cut.

In this case, an upper reinforcement plate 402 is mounted on a top surface of a battery module 100 and a lower reinforcement plate 403 is mounted on a bottom surface of the battery module 100. The upper reinforcement plate 402 includes an upper base plate 404 disposed on the top surface of the battery module 100 along a length direction of the battery module 100, and upper bent portions 405 bent upward in a vertical direction from two side edges of the upper base plate 404. The lower reinforcement plate 403 includes a lower base plate 406 disposed on the bottom surface of the battery module 100 along the length direction of the battery module 100, and lower bent portions 407 bent downward in the vertical direction from two side edges of the lower base plate 406.

An end of the upper base plate 404 is firmly fixed to the upper flange unit 112a by using fasteners such as a bolt 143 and a nut 144. Also, an end of the lower base plate 406 is combined with the lower flange unit 112b by using fasteners such as bolts 143 and nuts 144.

As such, the upper and lower reinforcement plates 402 and 403 prevent the battery module 100 from being deformed downward due to weights of a plurality of battery units 101.

Furthermore, insulation plates 408 formed of an insulating material such as polymer resin in order to prevent shorts caused by a drop of the battery units 101 stacked in the vertical direction may be further mounted on a bottom surface of the upper base plate 404 facing the top surface of the battery module 100 and on a top surface of the lower base plate 406 facing the bottom surface of the battery module 100. The insulation plates 408 are attached on the upper and lower base plates 404 and 406 along length directions of the upper and lower base plates 404 and 406.

Alternatively, if the upper and lower reinforcement plates 402 and 403 are formed of an insulating material having a desired strength instead of a metallic material, due to their own insulation properties, the insulation plates 408 are not additional required. The insulation method between the battery units 101 and the upper and lower reinforcement plates 402 and 403 is not limited any one insulation method as long as the battery units 101 are insulated from the upper and lower reinforcement plates 402 and 403.

Referring back to FIGS. 3 and 6, the upper reinforcement plate 402 mounted on a bottom surface of the upper battery module 120 and the lower reinforcement plate 403 mounted on a top surface of the lower battery module 130 are combined with each other so as to form a sealed gas discharge hole 301. As such, when a gas is generated from inside the battery units 101 due to a damage of the lower battery module 130, the gas discharge hole 301 may function as a gas passage.

As such, as illustrated in FIG. 6, the battery pack 300 forms an assembly of the battery modules 100 stacked in the horizontal and vertical directions. Neighboring battery modules 100 may be firmly fixed by connecting to each other the first and second end plates 106 and 107 disposed at outermost sides of the battery modules 100.

As described above, according to the one or more of the above embodiments of the present invention, a battery pack may have advantages described below.

First, as stacked battery modules are connected to each other by using end plates, the battery module may be firmly fixed to each other without an additional connection frame.

Second, as the additional connection frame is not required, the weight of a battery pack may be reduced.

Third, the structure of the stacked battery modules is simplified.

Fourth, as the stacked battery modules have the same connection structure, manufacturing costs may be reduced.

Fifth, as reinforcement plates are mounted between the stacked battery modules, a plurality of battery units may be supported.

Sixth, as the reinforcement plates are mounted, a gas discharge passage may be formed between neighboring battery modules.

It should be understood that the exemplary embodiments described therein should be considered in a descriptive sense. Descriptions of features or aspects within each embodiment should typically be considered as available for other similar features or aspects in other embodiments.

## Claims

1. A battery pack (300) comprising a plurality of battery modules (100), each battery module (100) comprising:
a plurality of battery units (101) arranged along a first direction (Y),
a first end plate (108) and a second end plate (107), wherein the plurality of battery units (101) is arranged between the first and second end plate (108, 107),
wherein the first and second end plates (108, 107) are fixed to each other or are fixed to the plurality of battery units (101), and wherein a first or second end plate (108, 107) of a first battery module is fixed to a first or second end plate of a second, adjacent battery module (108, 107) to connect adjacent battery modules (100) of the battery pack (300),
**characterized in that**
the battery module (100) further comprises:
a first reinforcement plate (402) mounted on a third side surface of the plurality of battery units (101), extending in the first direction (Y) and coupled to the first and second end plates (108, 107); and
a second reinforcement plate (403) mounted on a fourth side surface of the plurality of battery units (101) opposite the third side surface, extending in the first direction (Y) and coupled to the first and second end plates (108, 107);
wherein
the first reinforcement plate (402) comprises a first base plate (404) on the third side of the plurality of battery units (101) and first bent portions (405) extending from sides of the first base plate (404) away from the plurality of battery units (101), and
the second reinforcement plate (403) comprises a second base plate (406) on the fourth side of the plurality of battery units (101) and second bent portions (407) extending from sides of the second base plate (406) away from the plurality of battery units (101);
wherein a first reinforcement plate (402) of a first battery module (100) combined to a second reinforcement plate (403) of a second, adjacent battery module (100) forms a gas discharge path (301)

2. The battery pack (300) of claim 1, wherein the first and second end plates (108, 107) are fixed to each other by:
a first guide plate (109) arranged along said first direction (Y) on a first side surface of the plurality of battery units (101) and coupled to the first and second end plate (108, 107),
a second guide plate (109) arranged along said first direction (Y) on a second side surface of the plurality of battery units (101) being opposite to said first side surface and coupled to the first and second end plates (108, 107).

3. The battery pack (300) of claim 1 or 2, wherein each of the first and second end plates (108, 107) comprises a base plate (111) and at least one flange unit (112) extending from the base plate (111) to combine different end plates (108, 107) with each other and/or to fix the guide plates (109) thereto.

4. The battery pack (300) of claim 3, wherein the at least one flange unit (112) extends from side surfaces of the base plate (111) in a direction away from the plurality of battery units (101).

5. The battery pack (300) of claim 1, wherein an insulation plate (408) is mounted on a surface of the first and/or second base plate (404, 406) facing the battery module (100) to which the respective reinforcement plate (403, 403) is mounted.

6. The battery pack (300) of any of claims 3 to 5, wherein the at least one flange unit (112) comprises:
a first flange unit (112) extending from a first side of the base plate (111),
a second flange unit (112) extending from a second side of the base plate (111), the second side being opposite to the first side,
a third flange unit (112a) extending from a third side of the base plate (111), and
a fourth flange unit (112b) extending from a fourth side of the base plate (111), the fourth side being opposite to the third side.

7. The battery pack (300) of claim 6, wherein the first guide plate (109) attaches to the first flange unit (112) and the second guide plate (109) attaches to the second flange unit (112).

8. The battery pack (300) of claim 6 or 7, wherein the first reinforcement plate (402) is attached to the third flange unit (112a) and the second reinforcement plate (403) is attached to the fourth flange unit (112b).

9. The battery pack of claim 8, wherein the third flange unit (112a) comprises a reduced height part adapted to receive said first reinforcement plate (402) of the respective battery module (100) and a second reinforcement plate of a neighboring battery module (100).

10. The battery pack (300) of one of any of claims 3 to 8, wherein the at least one flange unit (112) comprises combination holes (113) to combine different end plates (108, 107) with each other.

11. The battery pack (300) of claim 10, wherein connecting elements (143, 144) are used to combine the combination holes (113) of different end plates (108, 107), and/or wherein connecting elements being nuts (144) and bolts (143) are used to combine the combination holes (113) of different end plates (108, 107).

12. The battery pack (300) of any of the previous claims, wherein the first and second guide plates (109) comprise heat-radiating holes (110).

## Patentansprüche

1. Batteriepack (300), aufweisend eine Vielzahl von Batteriemodulen (100), wobei jedes Batteriemodul (100) aufweist:
eine Vielzahl von Batterieeinheiten (101), die entlang einer ersten Richtung (Y) angeordnet sind,
eine erste Endplatte (108) und eine zweite Endplatte (107), wobei die Vielzahl der Batterieeinheiten (101) zwischen der ersten und zweiten Endplatte (108, 107) angeordnet ist, wobei die erste und zweite Endplatte (108, 107) aneinander befestigt oder an der Vielzahl der Batterieeinheiten (101) befestigt sind, und wobei eine erste oder zweite Endplatte (108, 107) eines ersten Batteriemoduls an einer ersten oder zweiten Endplatte eines zweiten, benachbarten Batteriemoduls (108, 107) befestigt ist, so dass benachbarte Batteriemodule (100) des Batteriepacks (300) miteinander verbunden sind,
**dadurch gekennzeichnet, dass**
das Batteriemodul (100) weiterhin aufweist:
eine erste Verstärkungsplatte (402), die auf einer dritten Seitenfläche der Vielzahl der Batterieeinheiten (101) angebracht ist, sich in die erste Richtung (Y) erstreckt und an die erste und zweite Endplatte (108, 107) gekoppelt ist; und
eine zweite Verstärkungsplatte (403), die auf einer der dritten Seitenfläche gegenüber liegenden vierten Seitenfläche der Vielzahl der Batterieeinheiten (101) angebracht ist, sich in die erste Richtung (Y) erstreckt und an die erste und zweite Endplatte (108, 107) gekoppelt ist;
wobei
die erste Verstärkungsplatte (402) eine erste Basisplatte (404) auf der dritten Seite der Vielzahl der Batterieeinheiten (101) und erste gebogene Abschnitte (405), die sich von Seiten der ersten Basisplatte (404) von der Vielzahl der Batterieeinheiten (101) weg erstrecken, aufweist, und
die zweite Verstärkungsplatte (403) eine zweite Basisplatte (406) auf der vierten Seite der Vielzahl der Batterieeinheiten (101) und zweite gebogene Abschnitte (407), die sich von Seiten der zweiten Basisplatte (406) von der Vielzahl der Batterieeinheiten (101) weg erstrecken, aufweist;
wobei eine erste Verstärkungsplatte (402) eines ersten Batteriemoduls (100) in Kombination mit einer zweiten Verstärkungsplatte (403) eines zweiten, benachbarten Batteriemoduls (100) einen Gasentladungsweg (301) ausbildet.

2. Batteriepack (300) nach Anspruch 1, wobei die erste und zweite Endplatte (108, 107) durch Folgendes aneinander befestigt sind:
eine erste Führungsplatte (109), die entlang der besagten ersten Richtung (Y) auf einer ersten Seitenfläche der Vielzahl der Batterieeinheiten (101) angeordnet ist und an die erste und zweite Endplatte (108, 107) gekoppelt ist,
eine zweite Führungsplatte (109), die entlang der besagten ersten Richtung (Y) auf einer der besagten ersten Seitenfläche gegenüber liegenden zweiten Seitenfläche der Vielzahl der Batterieeinheiten (101) angeordnet ist und an die erste und zweite Endplatte (108, 107) gekoppelt ist.

3. Batteriepack (300) nach Anspruch 1 oder 2, wobei sowohl die erste als auch die zweite Endplatte (108, 107) eine Basisplatte (111) und zumindest eine Flanscheinheit (112) aufweisen, die sich von der Basisplatte (111) erstreckt, so dass sie verschiedene Endplatten (108, 107) miteinander kombiniert und/oder die Führungsplatten (109) daran befestigt.

4. Batteriepack (300) nach Anspruch 3, wobei sich die zumindest eine Flanscheinheit (112) von Seitenflächen der Basisplatte (111) in eine Richtung weg von der Vielzahl der Batterieeinheiten (101) erstreckt.

5. Batteriepack (300) nach Anspruch 1, wobei eine Isolierungsplatte (408) auf einer Oberfläche der ersten und/oder zweiten Basisplatte (404, 406) angebracht ist, die dem Batteriemodul (100) zugewandt ist, an dem die jeweilige Verstärkungsplatte (403, 403) angebracht ist.

6. Batteriepack (300) nach einem der Ansprüche 3 bis 5, wobei die zumindest eine Flanscheinheit (112) aufweist:
eine erste Flanscheinheit (112), die sich von einer ersten Seite der Basisplatte (111) erstreckt,
eine zweite Flanscheinheit (112), die sich von einer zweiten Seite der Basisplatte (111) erstreckt, wobei die zweite Seite der ersten Seite gegenüber liegt,
eine dritte Flanscheinheit (112a), die sich von einer dritten Seite der Basisplatte (111) erstreckt, und
eine vierte Flanscheinheit (112b), die sich von einer vierten Seite der Basisplatte (111) erstreckt, wobei die vierte Seite der dritten Seite gegenüber liegt.

7. Batteriepack (300) nach Anspruch 6, wobei die erste Führungsplatte (109) an der ersten Flanscheinheit (112) befestigt ist und die zweite Führungsplatte (109) an der zweiten Flanscheinheit (112) befestigt ist.

8. Batteriepack (300) nach Anspruch 6 oder 7, wobei die erste Verstärkungsplatte (402) an der dritten Flanscheinheit (112a) befestigt ist und die zweite Verstärkungsplatte (403) an der vierten Flanscheinheit (112b) befestigt ist.

9. Batteriepack nach Anspruch 8, wobei die dritte Flanscheinheit (112a) einen Teil von verringerter Höhe aufweist, der zur Aufnahme der besagten ersten Verstärkungsplatte (402) des jeweiligen Batteriemoduls (100) und einer zweiten Verstärkungsplatte eines benachbarten Batteriemoduls (100) ausgebildet ist.

10. Batteriepack (300) nach einem der Ansprüche 3 bis 8, wobei die zumindest eine Flanscheinheit (112) Kombinationslöcher (113) zum Miteinander-Kombinieren verschiedener Endplatten (108, 107) aufweist.

11. Batteriepack (300) nach Anspruch 10, wobei Verbindungselemente (143, 144) zum Kombinieren der Kombinationslöcher (113) verschiedener Endplatten (108, 107) verwendet werden, und/oder wobei Verbindungselemente, die Muttern (144) und Bolzen (143) sind, zum Kombinieren der Kombinationslöcher (113) verschiedener Endplatten (108, 107) verwendet werden.

12. Batteriepack (300) nach einem der vorhergehenden Ansprüche, wobei die erste und zweite Führungsplatte (109) Wärmeabstrahlungslöcher (110) aufweisen.

## Revendications

1. Ensemble de pile ou de batterie (300) comprenant une pluralité de modules de pile ou de batterie (100), chaque module de pile ou de batterie (100) comprenant :
une pluralité d'unités de pile ou de batterie (101) disposées le long d'une première direction (Y),
une première plaque d'extrémité (108) et une deuxième plaque d'extrémité (107), la pluralité d'unités de pile ou de batterie (101) étant disposée entre les première et deuxième plaques d'extrémité (108, 107),
dans lequel les première et deuxième plaques d'extrémité (108, 107) sont fixées l'une à l'autre ou sont fixées à la pluralité d'unités de pile ou de batterie (101), et dans lequel une première ou une deuxième plaque d'extrémité (108, 107) d'un premier module de pile ou de batterie est fixé à une première ou à une deuxième plaque d'extrémité d'un deuxième module de pile ou de batterie adjacent (108, 107) afin de connecter des modules de pile ou de batterie adjacents (100) de l'ensemble de pile ou de batterie (300),
**caractérisé en ce que** :
le module de pile ou de batterie (100) comprend de plus :
une première plaque de renfort (402) montée sur une troisième surface latérale de la pluralité d'unités de pile ou de batterie (101), s'étendant dans la première direction (Y) et couplée aux première et deuxième plaques d'extrémité (108, 107) ; et
une deuxième plaque de renfort (403) montée sur une quatrième surface latérale de la pluralité d'unités de pile ou de batterie (100) opposée à la troisième surface latérale, s'étendant dans la première direction (Y) et couplée aux première et deuxième plaques d'extrémité (108, 107) ;
dans lequel :
la première plaque de renfort (402) comprend une première plaque de base (404) sur le troisième côté de la pluralité d'unités de pile ou de batterie (101) et des premières parties incurvées (405) s'étendant à partir de côtés de la première plaque de base (404) de façon à s'éloigner de la pluralité d'unités de pile ou de batterie (101), et
la deuxième plaque de renfort (403) comprend une deuxième plaque de base (406) sur le quatrième côté de la pluralité d'unités de pile ou de batterie (101) et des deuxièmes parties incurvées (407) s'étendant à partir de côtés de la deuxième plaque de base (406) de façon à s'éloigner de la pluralité d'unités de pile ou de batterie (101) ;
dans lequel une première plaque de renfort (402) d'un premier module de pile ou de batterie (100) combinée à une deuxième plaque de renfort (403) d'un deuxième module de pile ou de batterie adjacent (100) forme un trajet de décharge de gaz (301).

2. Ensemble de pile ou de batterie (300) selon la revendication 1, dans lequel les première et deuxième plaques d'extrémité (108, 107) sont fixées l'une à l'autre par :
une première plaque de guidage (109) disposée le long de ladite première direction (Y) sur une première surface latérale de la pluralité d'unités de pile ou de batterie (101) et couplée aux première et deuxième plaques d'extrémité (108, 107),
une deuxième plaque de guidage (109) disposée le long de ladite première direction (Y) sur une deuxième surface latérale de la pluralité d'unités de pile ou de batterie (101), opposée à ladite première surface latérale et couplée aux première et deuxième plaques d'extrémité (108, 107).

3. Ensemble de pile ou de batterie (300) selon la revendication 1 ou 2, dans lequel chacune des première et deuxième plaques d'extrémité (108, 107) comprend une plaque de base (111) et au moins une unité de bride (112) s'étendant à partir de la plaque de base (111), de façon à combiner des plaques d'extrémité différentes (108, 107) les unes aux autres et/ou à fixer les plaques de guidage (109) à celles-ci.

4. Ensemble de pile ou de batterie (300) selon la revendication 3, dans lequel la au moins une unité de bride (112) s'étend à partir de surfaces latérales de la plaque de base (111) dans une direction s'éloignant de la pluralité d'unités de pile ou de batterie (101).

5. Ensemble de pile ou de batterie (300) selon la revendication 1, dans lequel une plaque d'isolement (408) est montée sur une surface de la première et/ou de la deuxième plaque de base (404, 406) dirigée vers le module de pile ou de batterie (100) sur lequel la plaque de renfort respective (403, 403) est montée.

6. Ensemble de pile ou de batterie (300) selon l'une quelconque des revendications 3 à 5, dans lequel l'unité de bride au nombre d'au moins une (112) comprend :
une première unité de bride (112) s'étendant à partir d'un premier côté de la plaque de base (111),
une deuxième unité de bride (112) s'étendant à partir d'un deuxième côté de la plaque de base (111), le deuxième côté étant opposé au premier côté,
une troisième unité de bride (112a) s'étendant à partir d'un troisième côté de la plaque de base (111), et
une quatrième unité de bride (112b) s'étendant à partir d'un quatrième côté de la plaque de base (111), le quatrième côté étant opposé au troisième côté.

7. Ensemble de pile ou de batterie (300) selon la revendication 6, dans lequel la première plaque de guidage (109) s'attache à la première unité de bride (112) et la deuxième plaque de guidage (109) s'attache à la deuxième unité de bride (112).

8. Ensemble de pile ou de batterie (300) selon la revendication 6 ou 7, dans lequel la première plaque de renfort (402) est attachée à la troisième unité de bride (112a) et la deuxième plaque de renfort (403) est attachée à la quatrième unité de bride (112b).

9. Ensemble de pile ou de batterie selon la revendication 8, dans lequel la troisième unité de bride (112a) comprend une partie de hauteur réduite adaptée de façon à recevoir ladite première plaque de renfort (402) du module de pile ou de batterie respectif (100) et une deuxième plaque de renfort d'un module de pile ou de batterie voisin (100).

10. Ensemble de pile ou de batterie (300) selon l'une quelconque des revendications 3 à 8, dans lequel la au moins une unité de bride (112) comprend des trous de combinaison (113) afin de combiner des plaques d'extrémité différentes (108, 107) les unes avec les autres.

11. Ensemble de pile ou de batterie (300) selon la revendication 10, dans lequel des éléments de raccordement (143, 144) sont utilisés pour combiner les trous de combinaison (113) de plaques d'extrémité différentes (108, 107), et/ou dans lequel des éléments de raccordement, qui sont des écrous (144) et des boulons (143), sont utilisés pour combiner les trous de combinaison (133) de plaques d'extrémité différentes (108, 107).

12. Ensemble de pile ou de batterie (300) selon l'une quelconque des revendications précédentes, dans lequel les première et deuxième plaques de guidage (109) comprennent des trous de rayonnement de chaleur (110).
